# EUROPÄISCHE PATENTANMELDUNG

(11) **EP 2 336 598 A2**
(43) Veröffentlichungstag der Anmeldung: **22.06.2011**
(21) Anmeldenummer: 10015826.0
(22) Anmeldetag: 20.12.2010
(51) Int. Cl.: F16G 11/00

(54) **Befestigungssystem zum Befestigen eines Bauteils an einem Seil**

(30) Priorität: 21.12.2009 DE 102009060010
(71) Anmelder: Kögel, Christian, 68623 Lampertheim (DE); Rupp, Andreas, 64653 Lorsch (DE)
(72) Erfinder: Kögel, Christian, 68623 Lampertheim (DE); Rupp, Andreas, 64653 Lorsch (DE)
(74) Vertreter: Reiser, Tonio Andreas

(57) **Zusammenfassung**

Befestigungssystem zum Befestigen eines Bauteils (30) an einem Seil (S), umfassend einen am Seil (S) zu fixierenden Seilhalter (10), an dem das zu befestigende Bauteil (30) befestigt wird. Die Erfindung ist dadurch gekennzeichnet, dass das zu befestigende Bauteil (30) eine Ausnehmung (31) aufweist, durch die hindurch der Seilhalter (10) bis zum Erreichen einer definierten Endposition eingesetzt wird, wobei beim Erreichen dieser Endposition der eingesetzte Seilhalter (10) und das zu befestigende Bauteil (30) mittels korrespondierender Formschlusselemente selbsttätig miteinander verrasten.

## Beschreibung

Die Erfindung betrifft ein Befestigungssystem zum Befestigen eines Bauteils an einem Seil, welches z.B. ein Stahlseil oder eine Schnur sein kann, umfassend einen am Seil festzulegenden bzw. zu fixierenden Seilhalter, an dem das zu befestigende Bauteil befestigt wird, wodurch eine mittelbare Befestigung des Bauteils am Seil erzielt wird.

Ein derartiges Befestigungssystem wird beispielsweise zum Aufhängen eines Objekts, wie insbesondere einer Leuchte, verwendet. Das lastaufnehmende bzw. lastabtragende Seilende wird z. B. an einer Raumdecke befestigt und der so genannte Seilhalter, an dem das zu befestigende Objekt mittelbar oder unmittelbar befestigbar ist, wird hiervon entfernt am Seil fixiert. Ein derartiges Befestigungssystem ist aus der EP 0 486 981 A1 bekannt. Die Verbindung zwischen dem Seilhalter und dem zu befestigenden Bauteil erfolgt hier mit einem Gewindestift, was mit einem erheblichen Montageaufwand verbunden ist.

Der Erfindung liegt daher die Aufgabe zugrunde, ein Befestigungssystem der eingangs genannten Art auszugestalten und weiterzubilden, so dass mit diesem eine einfache und schnelle Montage ermöglicht wird.

Erfindungsgemäß wird die voranstehende Aufgabe mit einem Befestigungssystem gemäß den Merkmalen des Anspruchs 1 gelöst. Bevorzugte Weiterbildungen sind Gegenstand der abhängigen Ansprüche. Die Lösung der Aufgabe erstreckt sich auch auf eine bevorzugte Verwendung dieses Befestigungssystems zum Aufhängen eines Objekts und insbesondere zum Aufhängen einer Leuchte, sowie auf einen Seilhalter und auf eine Befestigungsklammer, die in dem erfindungsgemäßen Befestigungssystem verwendbar sind.

Erfindungsgemäß ist ein Befestigungssystem der eingangs genannten Art dadurch gekennzeichnet, dass das zu befestigende Bauteil eine Ausnehmung aufweist, durch die hindurch der Seilhalter bis zum Erreichen einer definierten Endposition eingesetzt wird, bzw. in die der Seilhalter bis zu dieser Endposition einführbar ist, wobei beim Erreichen dieser Endposition der eingesetzte Seilhalter und das zu befestigende Bauteil mittels korrespondierender Formschlusselemente selbsttätig bzw. automatisch und formschlüssig miteinander verrasten, um die Befestigung des Bauteils am Seilhalter und damit die mittelbare Befestigung des Bauteils am Seil herbeizuführen.

Die Erfindung basiert auf der Idee, zwischen dem zu befestigenden Bauteil und dem Seilhalter eine clipsartige Verbindung vorzusehen, die schnell und einfach hergestellt und idealerweise bei Bedarf auch wieder gelöst werden kann. Hierzu wird der Seilhalter bezüglich einer bevorzugten Montagelage quasi von der Unterseite in eine dafür vorgesehene Ausnehmung am Bauteil bis zu einer durch einen mechanischen Anschlag definierten Endposition eingesteckt, wobei das zu befestigende Bauteil und der Seilhalter miteinander formschlüssig verrasten. Indem die miteinander korrespondierenden Formschlusselemente selbsttätig miteinander verrasten, entfallen bislang manuell durchzuführende Arbeits- und Montageschritte. Der Seilhalter kann auf diese Weise einfach an unterschiedlichen Gegenständen bzw. Bauteilen (wie nachfolgend noch näher erläutert) befestigt werden und umgekehrt. Hierbei wird auch eine formschöne und ästhetisch ansprechende Gestaltung der Verbindung zwischen Bauteil und Seilhalter ermöglicht, was z. B. bei der Befestigung von Designerlampen eine wichtige Rolle spielt. So kann z. B auf eine Kontermutter oder eine Konterscheibe verzichtet werden, wie diese bei der EP 0 486 981 A1 vorgesehen ist, wodurch die erforderlichen Montageteile reduziert und Kosten eingespart werden.

Hierbei ist denkbar bzw. bevorzugt vorgesehen, dass die definierte Endposition des Seilhalters relativ zu dem zu befestigenden Bauteil durch wenigstens einen an der Außenseite bzw. Außenfläche des Seilhalters ausgebildeten Anschlag bestimmt ist. Dieser Anschlag erfüllt gleichfalls auch eine Tragfunktion, indem dieser als Auflager für das zu befestigende Bauteil dient, wie nachfolgend im Zusammenhang mit der Zeichnung näher erläutert.

Bevorzugt ist vorgesehen, dass der Seilhalter an seiner Außenfläche wenigstens eine Vertiefung aufweist, die insbesondere als umlaufende Nut ausgebildet ist, und dass das zu befestigende Bauteil am Innenumfang der Ausnehmung wenigstens einen, bevorzugt nach innen und insbesondere radial nach innen weisenden Vorsprung aufweist, der formschlüssig in diese Vertiefung eingreifen kann. Die Vertiefung und der Vorsprung bilden die oben genannten korrespondierenden Formschlusselemente.

Bevorzugt ist vorgesehen, dass der Seilhalter an seiner Außenfläche eine insbesondere kegelförmige bzw. konische Einführschräge aufweist. Diese Einführschräge erleichtert das Einsetzen des Seilhalters in die Ausnehmung am Bauteil und verhindert hierbei z. B. ein Verkanten. Zudem kann mittels dieser Einführschräge beim Einsetzen des Seilhalters in die Ausnehmung am zu befestigenden Bauteil ein elastisches Auslenken eines Vorsprungs am Innenumfang der Ausnehmung herbeigeführt werden, so dass dieser Vorsprung nachfolgend aufgrund seiner Vorspannung selbsttätig in die Vertiefung am Seilhalter einrasten kann.

Bevorzugt ist vorgesehen, dass der Seilhalter ein an seiner Außenfläche in axialer Richtung mehrfach abgestuftes, zylindrisches Gehäuse umfasst, wobei die einzelnen Stufen axiale Abschnitte mit unterschiedlichen Durchmessern ausbilden. Die einzelnen axialen Abschnitte an der Außenfläche dieses Gehäuses bilden z. B. den Anschlag, die Nut und / oder die Einführschräge aus.

Hierbei ist bevorzugt vorgesehen, dass das Gehäuse des Seilhalters an einem axialen Ende eine Öffnung aufweist, aus der das lastaufnehmende bzw. lastabtragende Seilende in axialer Richtung herausführbar ist. Diese Öffnung befindet sich bezüglich einer bevorzugten Montagelage des Seilhalters am oberen axialen Ende des Gehäuses. Das lastfreie Seilende kann durch eine zweite Öffnung am entgegengesetzten axialen Ende des Gehäuses, insbesondere nach unten, heraus geführt werden. Alternativ kann das lastfreie Seilende durch eine seitlich angeordnete zweite Öffnung herausgeführt werden. Wenn das Seil nach unten herausgeführt wird, können an diesem Ende des Seils weitere Seilhalter fixiert werden.

Ferner ist hierbei bevorzugt vorgesehen, dass der Anschlag am Seilhalter an dem der Öffnung gegenüberliegenden axialen Ende des Gehäuses als eine radial vorspringende Schulter ausgebildet ist. Diese Schulter befindet sich bezüglich der bevorzugten Montagelage des Seilhalters am unteren axialen Ende des Gehäuses. Bevorzugt ist vorgesehen, dass sich in axialer Richtung unmittelbar oberhalb dieser Schulter die (Rast-)Vertiefung in Form einer umlaufenden Nut befindet. Bevorzugt dient die Schulter auch als Auflager für das zu befestigende Bauteil, wie bereits oben erläutert.

Ferner ist bevorzugt vorgesehen, dass der Seilhalter eine im Gehäuse befindliche Spann- bzw. Klemmeinrichtung zum veränderlichen bzw. verstellbaren Festlegen bzw. Fixieren des Seilhalters am Seil aufweist. Diese Spanneinrichtung umfasst z. B. wenigstens einen Klemmkörper, der durch eine Schräge im Inneren des Gehäuses gegen das Seil gedrückt wird, um dieses einzuklemmen. Eine solche Spanneinrichtung ist z. B. in der DE 10 2008 012 020 A1 beschrieben.

Bevorzugt ist vorgesehen, dass am zu befestigenden Bauteil der am Innenumfang der Ausnehmung angeordnete Vorsprung als wenigstens eine Zunge ausgebildet ist. Die Zunge kann darüber hinaus elastisch ausgebildet sein. Bezüglich einer axialen Draufsicht ist eine solche Zunge insbesondere trapezförmig ausgebildet. Ferner ist bevorzugt vorgesehen, dass am Innenumfang der Ausnehmung drei um jeweils 120° versetzt angeordnete Zungen vorgesehen sind. Vorzugsweise liegen die Zungen mit Vorspannung in dem Nutgrund der Vertiefung an, um eine sichere elektrisch leitende Verbindung von Bauteil und Seilhalter zu gewährleisten. Dies ist insbesondere dann vorteilhaft, wenn diese elektrisch leitende Verbindung Bestandteil der Erdung ist.

Bevorzugt ist vorgesehen, dass das zu befestigende Bauteil eine Befestigungsklammer oder eine Leuchte ist, wie nachfolgend im Zusammenhang mit der Zeichnung noch näher erläutert. Eine solche Befestigungsklammer dient der mittelbaren Befestigung eines zu befestigenden Objekts am Seilhalter. Für eine solche Befestigungsklammer, die aufgrund ihrer Ausbildung zur Verwendung in einem erfindungsgemäßen Befestigungssystem geeignet ist, wird gesondert Schutz beansprucht. Diese Befestigungsklammer ist unter anderem dadurch gekennzeichnet, dass diese wenigstens eine Ausnehmung aufweist, in die ein Seilhalter definiert eingesetzt werden kann, wobei am Innenumfang dieser Ausnehmung wenigstens ein nach innen weisender Vorsprung angeordnet ist, der beim Einsetzen des Seilhalters selbsttätig in eine korrespondierende Vertiefung am Seilhalter einrasten kann.

Ferner wird auch für einen Seilhalter, der aufgrund seiner Ausbildung zur Verwendung in einem erfindungsgemäßen Befestigungssystem geeignet ist, gesondert Schutz beansprucht. Dieser Seilhalter ist unter anderem dadurch gekennzeichnet, dass dieser an seiner Außenfläche wenigstens eine Vertiefung insbesondere in Form einer umlaufenden Nut aufweist, in die ein korrespondierendes Rastelement eines am Seilhalter zu befestigenden Bauteils selbsttätig einrasten kann.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und / oder bildlich dargestellten Merkmale für sich oder in beliebiger Kombination den Gegenstand der Erfindung, unabhängig von der Zusammenfassung in einzelnen Ansprüchen oder deren Rückbeziehung.

In der Zeichnung zeigen:
Fig. 1 einen Seilhalter in einer perspektivischen Ansicht und einer Seitenansicht;
Fig. 2 die Befestigung eines Bauteils am Seilhalter aus Fig. 1 in einer Seitenansicht, und eine hierfür vorgesehene Ausnehmung im Bauteil in einer axialen Draufsicht;
Fig. 3 die Befestigung eines Bauteils am Seilhalter gemäß der Fig. 2 in einer perspektivischen Ansicht und in einer Detailansicht; und
Fig. 4 eine Befestigungsklammer zur Befestigung am Seilhalter aus Fig. 1 in einer perspektivischen Ansicht.

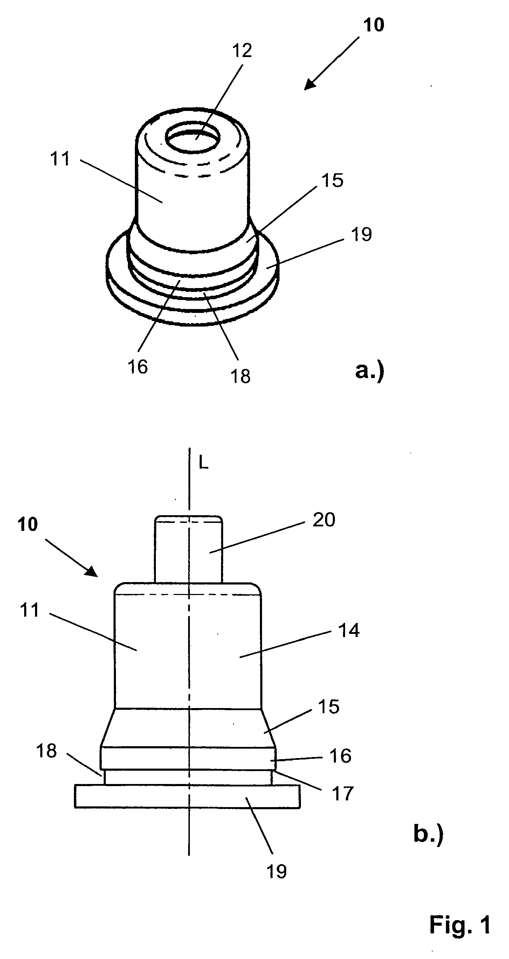

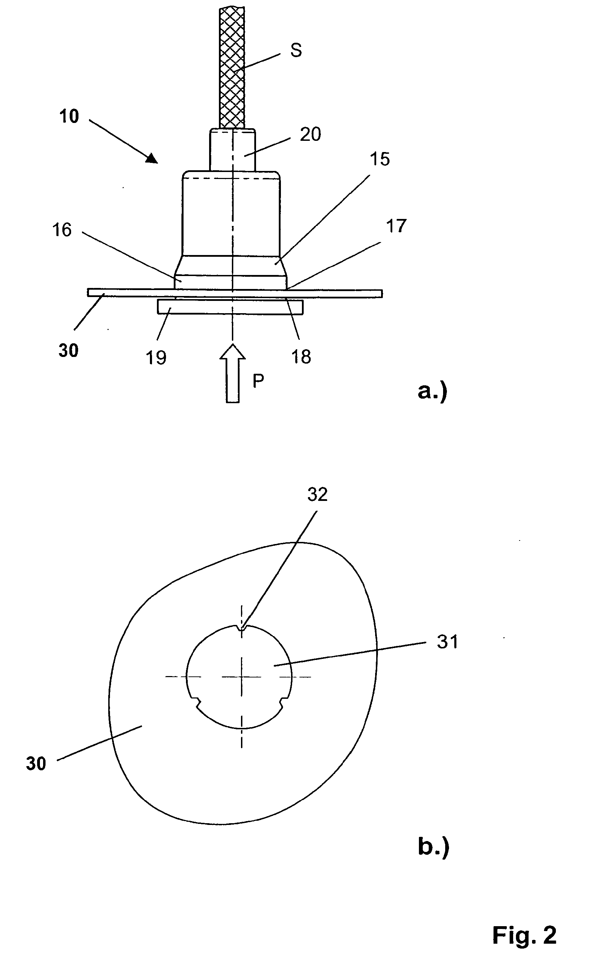

Fig. 1 zeigt einen Seilhalter 10 in einer bevorzugten Montagelage mit einer vertikal ausgerichteten Längsachse L. Der Seilhalter 10 umfasst ein Gehäuse 11, an dessen oberem axialen Ende eine Öffnung 12 ausgebildet ist, durch die hindurch ein Seil S (vgl. Fig. 2a) oder eine das Seil umgebende Tülle 20 (vgl. Fig. 1b) geführt wird. Der Seilhalter 10 kann mittels einer im Gehäuse 11 befindlichen Spanneinrichtung am Seil S festgespannt bzw. festgeklemmt werden, wodurch der Seilhalter 10 in einer definierten Lage am Seil S fixiert wird. Die Spanneinrichtung kann in dem Inneren des Gehäuses 11 angeordnete Klemmkörper, wie Kugeln oder dergleichen umfassen, die mittels einer schrägen Druckfläche in radialer Richtung nach innen bewegt und mit dem Seil ohne Werkzeug verspannt bzw. verklemmt werden können. An der Außenfläche des Gehäuses 11 kann ein Bauteil befestigt werden (wie nachfolgend noch näher erläutert), wodurch dieses Bauteil mittelbar an dem Seil S befestigt wird. Die Tülle 20 kann Bestandteil der Spanneinrichtung sein, wie aus der DE 10 2008 012 020 A1 bekannt.

Das Gehäuse 11 ist als mehrfach abgestuftes, zylindrisches Gehäuse mit mehreren axialen Abschnitten ausgebildet. Von oben nach unten umfasst das Gehäuse 11 an seiner Außenfläche einen zylindrischen Abschnitt 14, einen als Einführschräge dienenden und sich nach unten radial aufweitenden konischen Abschnitt 15, einen ringförmigen Abschnitt 16, eine umlaufende radiale Vertiefung in Form einer Nut 18 und unmittelbar hieran anschließend eine als Anschlag dienende, radial vorspringende Schulter 19, die gleichfalls das untere axiale Ende des Gehäuses 11 ausbildet. Am Übergang vom ringförmigen Abschnitt 16 zur Nut 18 ist eine scharfe Umfangskante 17 ausgebildet. Das Gehäuse 11 kann ein Gussteil oder ein Drehteil aus einem Metallmaterial und / oder aus einem Kunststoffmaterial sein. Bevorzugt ist das Gehäuse 11 einstückig ausgebildet. Alternativ kann das Gehäuse 11 auch zwei- oder mehrstückig ausgebildet werden.

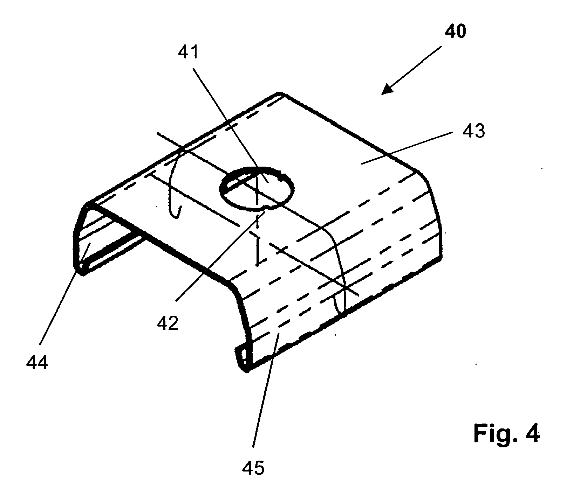

Fig. 2a zeigt ein am Seilhalter 10 bzw. an dessen Gehäuse 11 befestigtes Bauteil 30, das nur teilweise dargestellt ist. Bei diesem Bauteil 30 kann es sich z. B. um die in Fig. 4 gezeigte Befestigungsklammer oder um einen Leuchtenkörper oder dergleichen handeln. Das zu befestigende Bauteil 30 weist eine Ausnehmung bzw. Bohrung 31 auf (vgl. Fig. 2b), durch die hindurch der Seilhalter 10 gemäß dem Pfeil P in axialer Richtung L von der Unterseite eingesteckt wird, bis die Schulter 19 von unten am Bauteil 30 anschlägt, wie in Fig. 2a gezeigt. Der Durchmesser der Ausnehmung 31 ist geringfügig größer als der Durchmesser des ringförmigen Abschnitts 16 am Gehäuse 11 des Seilhalters 10. Hingegen ist der Durchmesser der Schulter 19 am Gehäuse 11 des Seilhalters 10 größer als der Durchmesser der Ausnehmung 31. Damit kann die Schulter 19 auch als Auflager für das Bauteil 30 dienen, wie in der Fig. 2a gezeigt. D. h. die Schulter 19 trägt die Gewichtlast (oder die Spannlast) des Bauteils 30.

Zur stabilen Befestigung und/oder zur Arretierung des Bauteils 30 am Seilhalter 10 sind am Innenumfang der Ausnehmung 31 radial nach innen weisende Vorsprünge angeordnet, die als elastische Zungen bzw. Rastnasen 32 ausgebildet sind. Wie aus der Fig. 2b ersichtlich, sind bei der dargestellten Ausführungsform insgesamt drei Zungen 32 vorgesehen, die jeweils um 120° zueinander versetzt angeordnet sind. Beim Einführen des Seilhalters 10 (vgl. Fig. 2a, Pfeil P) in die Ausnehmung 31 am Bauteil 30 gleiten die Zungen 32 auf dem konischen Abschnitt 15 am Gehäuse 11 ab, was eine Zentrierung von Seilhalter 10 und Bauteil 30 bewirkt. Dabei gelangen die Zungen 32 an dem konischen Abschnitt 15 zur Anlage und schneiden zumindest teilweise in das Material des konischen Abschnitts 15 ein. Dies führt zu einer plastischen Verformung des konischen Abschnitts 15 in diesen Bereichen. Schließlich rasten die Zungen 32 nach dem Übergleiten des ringförmigen Abschnitts 16 am Gehäuse 11 automatisch in die Nut 18 ein und hintergreifen hierbei formschlüssig die scharfe Umfangskante 17. Dabei sind die Zungen 32 so ausgebildet, dass diese mit Vorspannung in dem Nutgrund der Nut 18 anliegen. Dieses Einrasten geschieht beim Anschlagen der Schulter 19 am Bauteil 30 oder unmittelbar davor. Das hör- und spürbare Einrasten der Zungen 32 in die Nut 18 signalisiert die korrekte Befestigung. Die Dicke bzw. Höhe der Zungen 32 ist an die Breite bzw. Höhe der Nut 18 angepasst und / oder umgekehrt. Nach dem Einrasten wird das Bauteil 30 gegenüber dem Seilhalter 10 verdreht, so dass die Zungen 32 von den plastisch verformten Bereichen des konischen Abschnitts 15 in Umfangsrichtung beabstandet sind. Dadurch wird die Verbindung zwischen Bauteil und Seilhalter noch einmal gegen unbeabsichtigtes Lösen gesichert.

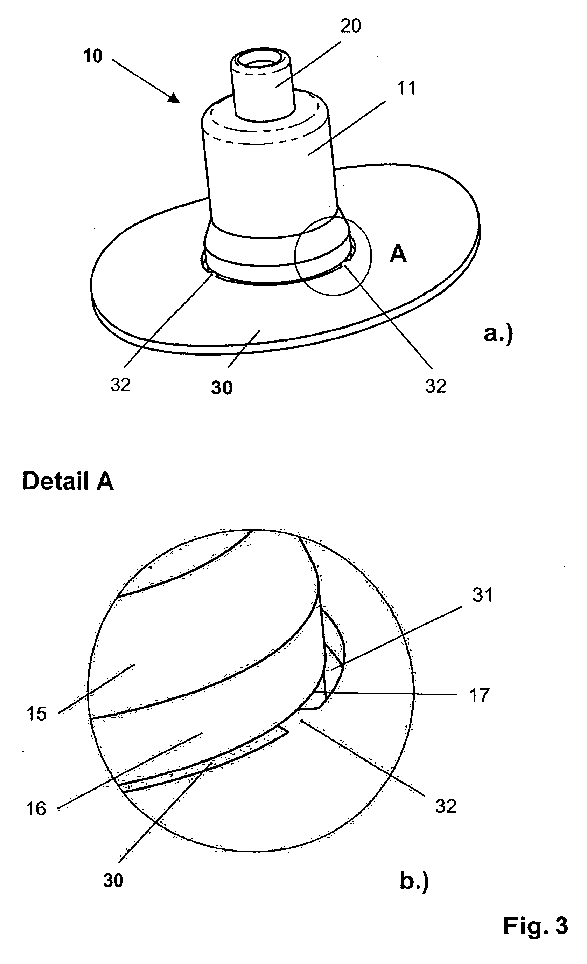

Die Befestigung des Bauteils 30 am Seilhalter 10 ist anschaulich in der Fig. 3 und insbesondere in der Detailansicht der Fig. 3b dargestellt. Gut zu erkennen ist hier, wie eine Zunge 32 am Innenumfang der Ausnehmung 31 in die Nut 18 am Gehäuse 11 des Seilhalters 10 eingreift und hierbei die scharfe Umfangskante 17 hintergreift. Ein Vorteil dieser Befestigung ist, dass das Befestigen unabhängig von einer bestimmten Drehlage zwischen Seilhalter 10 und zu befestigendem Bauteil 30 erfolgen kann. Über die Dimensionierung der Zungen 32 kann die erforderliche Fügekraft eingestellt werden, wobei die Fügekraft so eingestellt werden kann, dass eine werkzeuglose Montage erfolgen kann. Die Ausnehmung 31 im zu befestigenden Bauteil 30 ist in einfacher Weise in einem flächigen Abschnitt bspw. als Ausstanzung eingebracht, ohne dass dieser Bereich einer besonderen Verstärkung bedarf. Gleichwohl können im Bereich einer Ausnehmung 31 Verstärkungsrippen oder dergleichen im zu befestigenden Bauteil vorgesehen sein.

Bevorzugt, jedoch nicht ausschließlich, handelt es sich bei dem zu befestigenden Bauteil um eine Befestigungsklammer. Ein solche Befestigungsklammer 40 ist beispielhaft in Fig. 4 gezeigt.

Die Befestigungsklammer 40 weist zwei Klemmschenkel 44 und 45 auf, die über einen plattenartigen Verbindungssteg 43 miteinander verbunden sind, wobei die Klemmschenkel 44 und 45 federnd an diesem Verbindungssteg 43 angelenkt sind. Im Verbindungssteg 43 ist eine zentrale Ausnehmung bzw. Bohrung 41 angeordnet, die am Innenumfang insgesamt drei radial nach innen weisende Zungen 42 aufweist. Mittels dieser Ausnehmung 41 kann die Befestigungsklammer 40 in der oben erläuterten Weise mit dem Seilhalter 10 verbunden werden. Die Befestigungsklammer 40 ist bevorzugt einstückig als Blechteil und / oder Kunststoffteil ausgebildet. An der Befestigungsklammer 40 kann ein zu befestigendes Objekt, wie z. B. eine Leuchte oder eine Stromschiene, mittelbar befestigt werden. Alternativ kann das zu befestigende Objekt in der oben erläuterten erfindungsgemäßen Weise auch unmittelbar am Seilhalter 10 befestigt werden.

## Patentansprüche

1. Befestigungssystem zum Befestigen eines Bauteils (30) an einem Seil (S), umfassend einen am Seil (S) zu fixierenden Seilhalter (10), an dem das zu befestigende Bauteil (30) befestigt wird, **dadurch gekennzeichnet, dass** das zu befestigende Bauteil (30) eine Ausnehmung (31) aufweist, durch die hindurch der Seilhalter (10) bis zum Erreichen einer definierten Endposition eingesetzt wird, wobei beim Erreichen dieser Endposition der eingesetzte Seilhalter (10) und das zu befestigende Bauteil (30) mittels korrespondierender Formschlusselemente selbsttätig miteinander verrasten.

2. Befestigungssystem nach Anspruch 1, **dadurch gekennzeichnet, dass** die Endposition des Seilhalters (10) relativ zu dem zu befestigenden Bauteil (30) durch einen an der Außenfläche des Seilhalters (10) ausgebildeten Anschlag bestimmt ist.

3. Befestigungssystem nach Anspruch 1 oder 2, **dadurch gekennzeichnet, dass** der Seilhalter (10) an seiner Außenfläche wenigstens eine Vertiefung (18) aufweist und dass das zu befestigende Bauteil (30) am Innenumfang der Ausnehmung (31) wenigstens einen in diese Vertiefung (18) eingreifenden Vorsprung aufweist.

4. Befestigungssystem nach einem der Ansprüche 1 bis 3, **dadurch gekennzeichnet, dass** der Seilhalter (10) an seiner Außenfläche eine Einführschräge (15) aufweist.

5. Befestigungssystem nach einem der Ansprüche 1 bis 4, **dadurch gekennzeichnet, dass** der Seilhalter (10) ein an seiner Außenfläche in axialer Richtung mehrfach abgestuftes, zylindrisches Gehäuse (11) umfasst, wobei die einzelnen Stufen axiale Abschnitte mit unterschiedlichen Durchmessern ausbilden.

6. Befestigungssystem nach Anspruch 5, **dadurch gekennzeichnet, dass** das Gehäuse (11) des Seilhalters (10) an einem axialen Ende eine Öffnung (12) aufweist, aus der das lastaufnehmende Seilende in einer axialen Richtung (L) herausführbar ist.

7. Befestigungssystem nach Anspruch 6, **dadurch gekennzeichnet, dass** der Anschlag am Seilhalter (10) an dem der Öffnung (12) gegenüberliegenden axialen Ende des Gehäuses (11) als eine radial vorspringende Schulter (19) ausgebildet ist.

8. Befestigungssystem nach einem der Ansprüche 5 bis 7, **dadurch gekennzeichnet, dass** der Seilhalter (10) eine im Gehäuse (11) befindliche Spanneinrichtung zum veränderlichen Festlegen des Seilhalters (11) am Seil (S) aufweist.

9. Befestigungssystem nach einem der Ansprüche 3 bis 8, **dadurch gekennzeichnet, dass** am zu befestigenden Bauteil (30) der am Innenumfang der Ausnehmung (31) angeordnete Vorsprung als wenigstens eine Zunge (32) ausgebildet ist.

10. Befestigungssystem nach Anspruch 9, **dadurch gekennzeichnet, dass** die Zunge (32) trapezförmig ausgebildet ist.

11. Befestigungssystem nach Anspruch 9 oder 10, **dadurch gekennzeichnet, dass** am Innenumfang der Ausnehmung (31) drei um jeweils 120° versetzt angeordnete Zungen (32) angeordnet sind.

12. Befestigungssystem nach einem Ansprüche 1 bis 11, **dadurch gekennzeichnet, dass** das zu befestigende Bauteil (30) eine Befestigungsklammer (40) oder eine Leuchte ist.

13. Verwendung eines Befestigungssystems gemäß einem der Ansprüche 1 bis 12 zum Aufhängen eines Objekts und insbesondere zum Aufhängen einer Leuchte.

14. Seilhalter (10) zur Verwendung in einem Befestigungssystem gemäß einem der Ansprüche 1 bis 12, **dadurch gekennzeichnet, dass** dieser an seiner Außenfläche wenigstens eine Vertiefung (18) aufweist, in die ein korrespondierendes Rastelement (32) eines am Seilhalter (10) zu befestigenden Bauteils (30, 40) selbsttätig einrasten kann.

15. Befestigungsklammer (40) zur Verwendung in einem Befestigungssystem gemäß einem der Ansprüche 1 bis 12, **dadurch gekennzeichnet, dass** diese wenigstens eine Ausnehmung (41) aufweist, in die ein Seilhalter (10) definiert eingesetzt werden kann, wobei am Innenumfang dieser Ausnehmung (41) wenigstens ein nach innen weisender Vorsprung (42) angeordnet ist, der beim Einsetzen des Seilhalters (10) selbsttätig in eine korrespondierende Vertiefung (18) am Seilhalter (10) einrasten kann.
